# EUROPEAN PATENT SPECIFICATION

(11) **EP 3 361 591 B1**
(45) Date of publication and mention of the grant of the patent: **13.11.2024**
(21) Application number: 18154634.2
(22) Date of filing: 01.02.2018
(51) Int. Cl.: H02J 1/10, H02J 3/38

(54) **PHOTOVOLTAIC INVERTER SYSTEM AND OPERATION METHOD THEREOF**
FOTOVOLTAISCHES WECHSELRICHTERSYSTEM UND BETRIEBSVERFAHREN DAFÜR
SYSTÈME D'ONDULEUR PHOTOVOLTAÏQUE ET SON PROCÉDÉ DE FONCTIONNEMENT

(30) Priority: 10.02.2017 CN 201710073664
(43) Date of publication of application: 15.08.2018
(73) Proprietor: Sungrow Power Supply Co., Ltd., Hefei, Anhui 230088 (CN)
(72) Inventor: Gu, Yilei, Hefei, Anhui 230088 (CN); Gu, Yu, Hefei, Anhui 230088 (CN); Zhuang, Jiacai, Hefei, Anhui 230088 (CN)
(74) Representative: Zacco Norway AS

(56) References cited:
- EP-A2- 2 600 406
- WO-A1-2009/073868
- CN-U- 204 349 909
- US-A1- 2009 284 998
- US-A1- 2015 066 228
- US-A1- 2016 344 192

## Description

### TECHNICAL FIELD

The present disclosure relates to the technical field of photovoltaic power generation, and in particular to a photovoltaic inverter system and an operation method thereof.

### BACKGROUND

With the increasing demand on global energy source, the high cost of traditional energy sources and the growing concern on environmental problems, the solar energy market develops rapidly. The solar energy photovoltaic power generation is a major way for utilizing the solar energy. A conventional photovoltaic inverter system generally includes photovoltaic modules, inverters and a power grid.

Depending on different connections between the photovoltaic modules and the inverters, the photovoltaic inverter system may have different structures, such as a centralized structure, a string structure and a module structure. In the photovoltaic inverter system in the centralized structure, a photovoltaic array is formed by connecting the photovoltaic modules in series-parallel with each other to generate a high direct current voltage and current, the direct current power is converted into an alternating current power by an inverter, and then transmitted to the power grid. That is, the photovoltaic inverter system in the centralized structure has a simple structure and has a high efficiency of the inverter. However, it is found that, the photovoltaic inverter system in the centralized structure has only one maximum power point tracking (MPPT), which cannot solve the problem of power generation loss caused by the series-parallel mismatch of the modules. In addition, in the photovoltaic inverter system in the string structure or the module structure, the number of MPPTs may be increased, while such photovoltaic inverter system includes a large number of inverters. Since all the inverters are formed by high voltage devices and electrolytic capacitors, the photovoltaic inverter system in the string structure or the module structure has a low efficiency and a high cost. The document WO-A.2009/073868 discloses a distributed power system including multiple photovoltaic power sources and multiple power modules. The power modules include inputs coupled respectively to the PV power sources and outputs coupled in series to form a serial string and an inverter is coupled to the serial string. A signaling mechanism between the inverter and the power modules is adapted for controlling operation of the power modules and achieve MPPT.

In summary, it is desired to provide a photovoltaic inverter system to solve the problem of the series-parallel mismatch of a photovoltaic array due to being shaded and aging of photovoltaic modules, while reducing the cost of the photovoltaic inverter system.

### SUMMARY

In view of the above, a photovoltaic inverter system and an operation method thereof are provided according to the present disclosure to solve the problem of multiple peak values of a photovoltaic array and a high cost of a photovoltaic inverter system in the conventional technology.

To achieve the above object, a system is provided according to the independent claim 1. In detail, a photovoltaic inverter system is provided, which includes:
photovoltaic modules;
direct current/direct current (DC/DC) converters, where an input end of each of the DC/DC converters is connected to at least one of the photovoltaic modules, and each of the DC/DC converters is configured to control output power of the connected photovoltaic module;
at least one direct current combiner device, where output ends of a plurality of DC/DC converters among the DC/DC converters are connected in series with each other and then connected to an input end of the direct current combiner device, and the direct current combiner device is configured to combine direct currents outputted from a plurality of the DC/DC converters; and
a centralized inverter, where an output end of the at least one direct current combiner device is connected to an input end of the centralized inverter, and the centralized inverter is configured to convert a direct current outputted from the at least one direct current combiner device into an alternating current and couple the alternating current to a power grid or a load;
where the photovoltaic inverter system further comprises a photovoltaic string connected to the input end of the direct current combiner device, the photovoltaic string comprises one or more of the photovoltaic modules (101) and one or more of the DC/DC converters (102), wherein the one or more of the photovoltaic modules (101) and outputs of the one or more of the DC/DC converters (102) are connected in series with each other.

Preferably, the photovoltaic inverter system further includes: a communication device, where one end of the communication device is connected to the Internet cloud and the other end of the communication device is connected to the centralized inverter and/or the direct current combiner device, and the communication device is configured to collect production capacity information on the photovoltaic modules and schedule electric energy based on the production capacity information.

Preferably, the input end of each of the DC/DC converters is connected to two to six of the photovoltaic modules.

Preferably, each of the DC/DC converters is a non-isolated low gain converter including a non-isolated full-bridge BUCK/BOOST converter or a non-isolated half-bridge BUCK converter.

Preferably, the photovoltaic inverter system further includes: a protection element connected in series between a pair of the DC/DC converter strings, to prevent backflow of the electric energy between photovoltaic strings, where the protection element includes one or more of a diode, a metal oxide semiconductor (MOS) transistor, a controlled mechanical switch and a fuse.

Preferably, the direct current combiner device includes a combiner box or a busbar.

Preferably, the DC/DC converters are configured to communicate with the centralized inverter according to a power line communication (PLC) protocol, a RS485 communication protocol or a Zigbee protocol.

Preferably, the DC/DC converters are configured to communicate with the centralized inverter via the direct current combiner device.

Preferably, the centralized inverter has a capacity greater than 100kw.

Preferably, the photovoltaic inverter system further includes a protection element connected in series between a pair of the photovoltaic strings, or between a pair of the DC/DC converter string and the photovoltaic string, or between a pair of the DC/DC converter strings, wherein the protection element comprises one or more of a diode, a metal oxide semiconductor (MOS) transistor, a controlled mechanical switch and a fuse.

There is further provided an operation method, applied to the photovoltaic inverter system according to any one of the above items. The operation method includes: sampling, by each of the DC/DC converters, an input signal or an output signal of the DC/DC converter, and performing, by the DC/DC converter, a loop process on the input signal or the output signal, to maintain the input signal or the output signal at a preset value, so as to keep the output power of each of the photovoltaic modules to be maximum output power.

Preferably, the operation method further includes: performing, by the centralized inverter, maximum power point tracking by sampling direct current side information or alternating current side information, to obtain maximum output power of the photovoltaic inverter system.

It can be seen from the technical solutions that, the photovoltaic inverter system according to the present disclosure includes photovoltaic modules, DC/DC converters, at least one direct current combiner device and a centralized inverter. The input end of each of the DC/DC converters is connected to at least one of the photovoltaic modules, and each of the DC/DC converters is configured to control output power of the connected photovoltaic module. Output ends of the DC/DC converters are connected in series with each other and then connected to an input end of the direct current combiner device, and the direct current combiner device is configured to combine direct currents outputted from the DC/DC converters. An output end of the direct current combiner device is connected to an input end of the centralized inverter, and the centralized inverter is configured to convert a direct current outputted from the direct current combiner device into an alternating current and couple the alternating current to a power grid or a load.

In the photovoltaic inverter system according to the embodiments of the present disclosure, the input signal or the output signal of each DC/DC converter is sampled by the DC/DC converter, and the loop process is performed by the DC/DC converter on the input signal or the output signal to maintain the input signal or the output signal at a preset value, so as to keep the output power of the photovoltaic module to be the maximum output power, thereby solving the problem of the series-parallel mismatch of a photovoltaic array due to being shaded or aging of a photovoltaic module. In addition, the photovoltaic inverter system can include only one centralized inverter. Therefore, the cost is reduced compared with photovoltaic inverter systems in the conventional technology.

### BRIEF DESCRIPTION OF THE DRAWINGS

In order to more clearly illustrate embodiments of the present disclosure or technical solutions in the conventional technology, the drawings, which are to be used in the description of the embodiments or the conventional technology, are briefly described. It is apparent that, the drawings in the following description show only some embodiments of the present disclosure, and other drawings may be obtained by those skilled in the art from the drawings without creative efforts.
Figure 1 is a schematic diagram showing a structure of a photovoltaic inverter system according to an embodiment of the present disclosure;
Figure 2 is a schematic diagram showing a structure of another photovoltaic inverter system according to an embodiment of the present disclosure;
Figure 3 is a schematic diagram showing a structure of another photovoltaic inverter system according to an embodiment of the present disclosure;
Figure 4 shows output power curves of a photovoltaic module under different irradiances according to an embodiment of the present disclosure;
Figure 5 shows output power curves of a photovoltaic module at different temperatures according to an embodiment of the present disclosure;
Figure 6 shows an output power curve of a photovoltaic string in the case of being partially shaded according to an embodiment of the present disclosure;
Figure 7 shows an output power curve of another photovoltaic string in the case of being partially shaded according to an embodiment of the present disclosure;
Figure 8 shows output power curves of another photovoltaic string in the case of being partially shaded according to an embodiment of the present disclosure;
Figure 9 shows a calculation table for power loss of output power of a photovoltaic string in the case of being partially shaded according to an embodiment of the present disclosure;
Figure 10 is a schematic diagram showing a structure of another photovoltaic inverter system according to an embodiment of the present disclosure;
Figure 11 shows a circuit diagram of a non-isolated full-bridge BUCK/BOOST converter according to an embodiment of the present disclosure; and
Figure 12 shows a circuit diagram of a non-isolated half-bridge BUCK converter according to an embodiment of the present disclosure.

### DETAILED DESCRIPTION OF THE EMBODIMENTS

Technical solutions in embodiments of the present disclosure are clearly and completely described in connection with drawings in the embodiments of the present disclosure. It is apparent that embodiments described below are only some embodiments of the present disclosure, rather than all of the embodiments. All other embodiments obtained by those skilled in the art based on the embodiments in the present disclosure without creative efforts are within the scope of the present disclosure.

In a photovoltaic inverter system according to an embodiment of the present disclosure, an input signal or an output signal of each DC/DC converter is sampled by the DC/DC converter, and a loop process is performed by the DC/DC converter on the input signal or the output signal to maintain the input signal or the output signal at a preset value, so as to keep the output power of the photovoltaic module to be maximum output power, thereby solving the problem of the series-parallel mismatch of a photovoltaic array due to being shaded or aging of photovoltaic modules. In addition, the photovoltaic inverter system can include only one centralized inverter, so that the cost is reduced compared with photovoltaic inverter systems in the conventional technology.

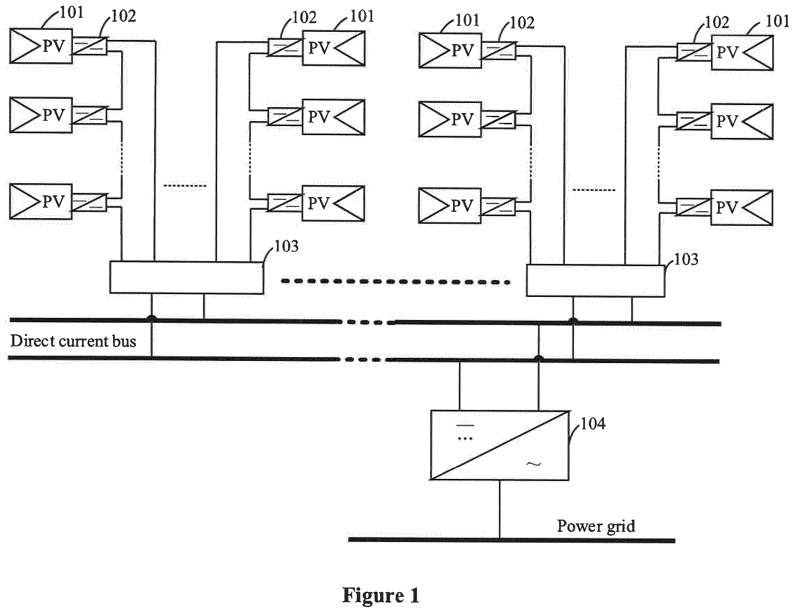

Reference is made to Figure 1, which is a schematic diagram showing a structure of a photovoltaic inverter system according to an embodiment of the present disclosure. A photovoltaic inverter system 10 includes photovoltaic modules 101, DC/DC converters 102, direct current combiner devices 103, and a centralized inverter 104.

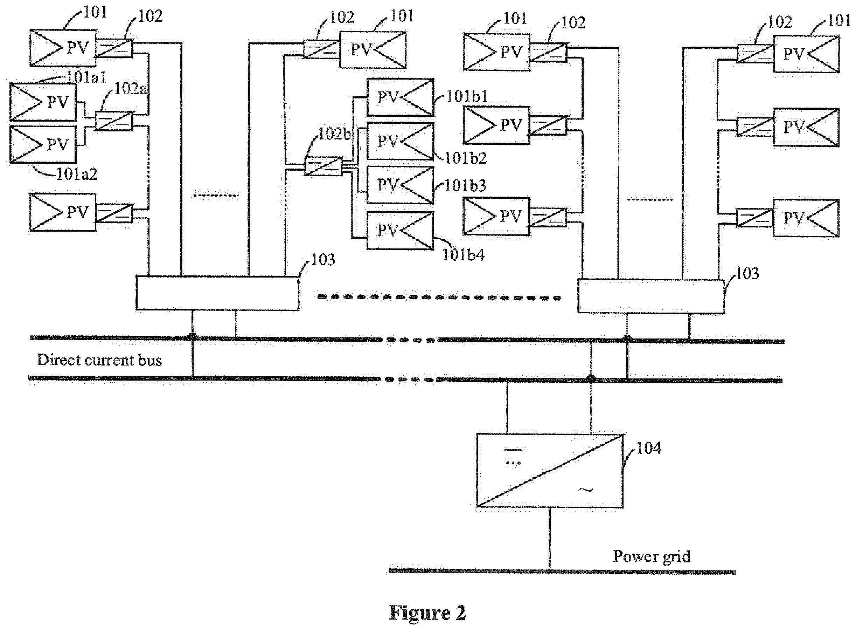

An input end of each of the DC/DC converters 102 is connected to at least one of the photovoltaic modules 101, to control output power of the connected photovoltaic module 101. As shown in Figure 1, each of the DC/DC converters 102 is connected to one photovoltaic module 101. Additionally, as shown in Figure 2, a DC/DC converter 102 may be connected to multiple photovoltaic modules 101. For example, a DC/DC converter 102a is connected to a photovoltaic module 101a and a photovoltaic module 101a2. It should be noted that, in the embodiment, the number of the photovoltaic modules 101 connected to a DC/DC converter 102 is not limited. For example, the DC/DC converter 102a is connected to two photovoltaic modules (the photovoltaic module 101a and the photovoltaic module 101a2), and a DC/DC converter 102b is connected to four photovoltaic modules (a photovoltaic module 101b1, a photovoltaic module 101b2, a photovoltaic module 101b3 and a photovoltaic module 101b4).

Preferably, the input end of each of the DC/DC converters 102 is connected to two to six photovoltaic modules 101. Compared with a case in which each DC/DC converter 102 is connected to one photovoltaic module 101, the number of the used DC/DC converters 102 can be reduced with this arrangement, thereby reducing the cost of the whole photovoltaic inverter system. It should be further noted that, in the photovoltaic inverter system according to the present disclosure, the number of the photovoltaic modules 101 connected to a same DC/DC converter 102 is not limited to the numbers given above, and may be adjusted based on practical configuration requirements, which are not listed in detail in the embodiment.

As shown in Figure 1, output ends of multiple DC/DC converters 102 are connected in series with each other and then connected to an input end of a direct current combiner device 103, and the direct current combiner device 103 is configured to combine direct currents outputted from the DC/DC converters. It should be noted that, in the embodiment, the DC/DC converters are connected in series with each other to form multiple DC/DC converter strings. Then, each direct current combiner device 103 is connected to at least one photovoltaic string and is configured to combine direct currents generated by multiple photovoltaic strings connected in parallel to the same direct current combiner device 103. Then, the direct current combiner device 103 transmits the combined direct current to the centralized inverter 104 via a direct current bus.

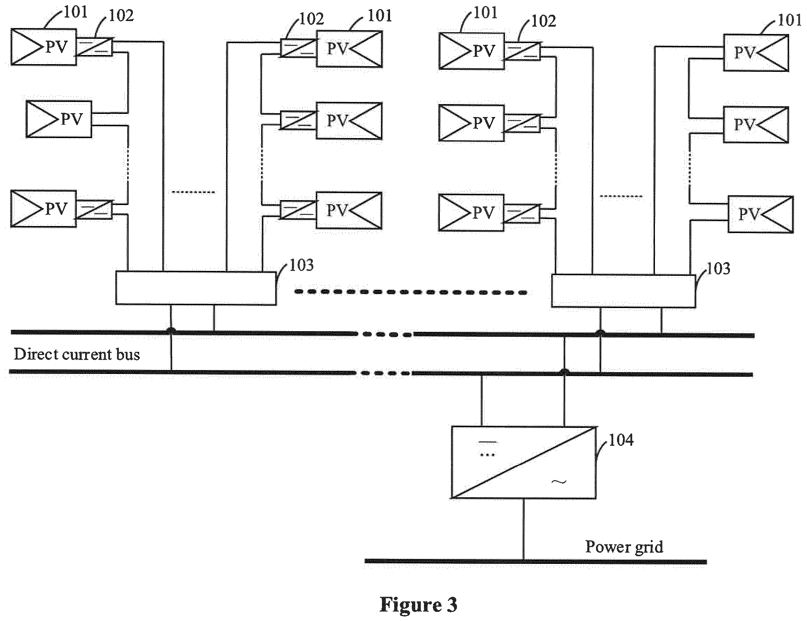

It should be noted that, in the embodiment, a DC/DC converter string is not the same as a photovoltaic string in definition. In a DC/DC converter string, each DC/DC converter is connected to at least one photovoltaic module. As shown in Figure 1 and Figure 2, strings connected to the direct current combiner device 103 are all DC/DC converter strings. However, as shown in Figure 3, photovoltaic strings further include strings other than the DC/DC converter strings. For example, in strings in the first column and in the fourth column in the figure, the photovoltaic modules may not be all connected to the DC/DC converters. That is, a photovoltaic string may be formed by photovoltaic modules connected in series with each other, or may be formed by photovoltaic modules connected in series with a DC/DC converters.

It should further be noted that, in the photovoltaic string according to the embodiment, the photovoltaic modules may be connected to or not connected to the DC/DC converters based on practical design requirements. The centralized inverter is an inverter with a MPPT function, and thus can track maximum output power of the photovoltaic module array if the photovoltaic string includes only the photovoltaic modules, or the DC/DC converter is in a pass-through mode.

Furthermore, in the embodiment, an output end of the at least one direct current combiner device 103 is connected to an input end of the centralized inverter 104, and the centralized inverter 104 is configured to convert a direct current power outputted from the direct current combiner device 103 into an alternating current power and couple the alternating current power to a power grid or a load.

It can be seen that, in the embodiment, output ends of multiple DC/DC converters 102 are coupled in series with each other to form a photovoltaic string, and multiple photovoltaic strings are connected in parallel and then connected to the centralized inverter 104. Since the photovoltaic modules are coupled to the DC/DC converters, and each DC/DC converter can perform MPPT independently, a module-level MPPT function in the embodiment is achieved with this solution.

Specifically, a photovoltaic module 101 is formed by multiple photovoltaic cells connected in series with each other. Considering special output properties of the photovoltaic cells, the following experiments are performed to verify that curves of the output power of the photovoltaic module shows special peak characteristics.

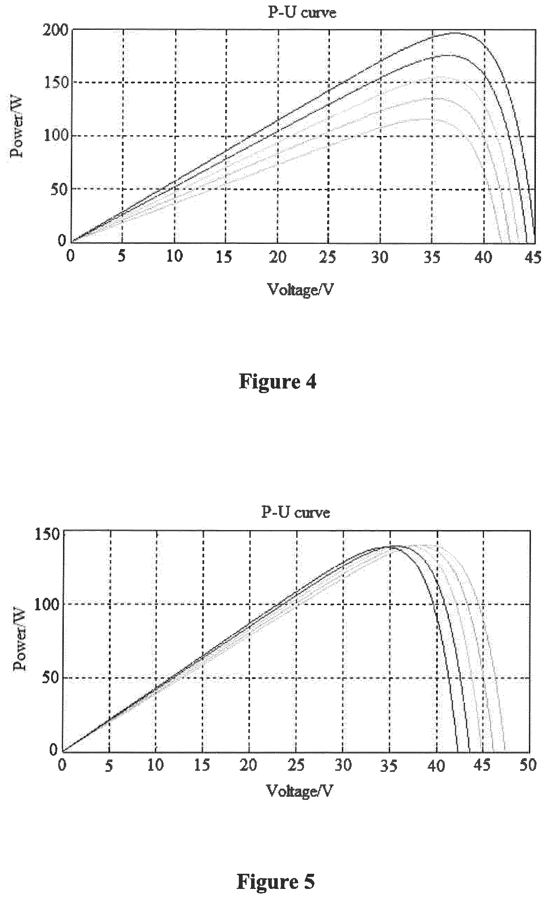

Reference is made to Figure 4, which shows output power curves of a photovoltaic module under different irradiances. Peak points of the output power of the photovoltaic module under irradiances of 1000W/m², 900W/m², 800W/m², 700W/m² and 600W/m² are sequentially illustrated from top to bottom. It can be seen from the experimental data that, a peak value of the output power of the photovoltaic module gradually decreases as the irradiance decreases, and voltages of the current photovoltaic module corresponding to the peak points in output power curves are slightly different from each other.

Furthermore, experiments are performed on output power of a photovoltaic module at different temperatures. As shown in Figure 5, output power curves of the photovoltaic module at 0°C, 10°C, 20°C, 30°C and 40°C are sequentially illustrated from right to left. It can be seen from the figure that, the voltage of the photovoltaic module corresponding to the peak point of the output power gradually drops as the temperature increases, and peak values of the output power of the current photovoltaic module at different temperatures are slightly different from each other.

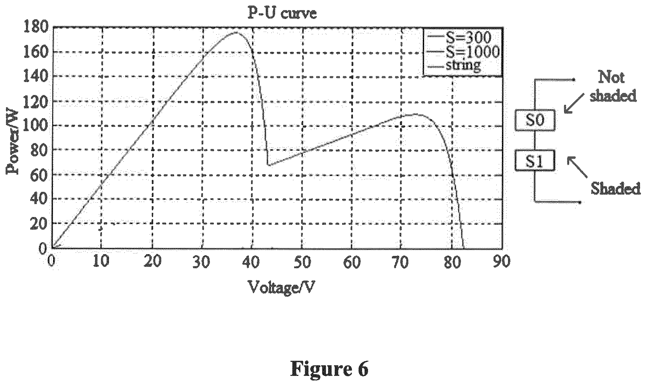

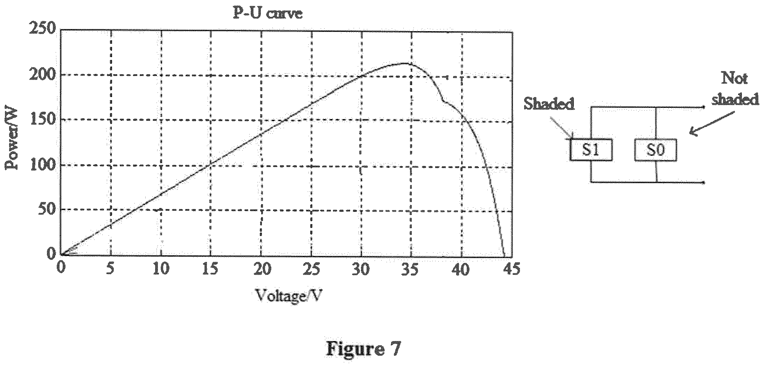

It should be noted that, Figure 4 and Figure 5 show output power curves of a single photovoltaic module. In a case that the photovoltaic inverter system includes multiple photovoltaic modules, a peak value of output power curve of a photovoltaic string formed by the photovoltaic modules changes due to being shaded or aging of one of the photovoltaic modules, as shown in Figure 6 and Figure 7. Figure 6 shows an output power curve of a photovoltaic string which is formed by two photovoltaic modules connected in series with each other in a case that one of the photovoltaic modules is shaded. It can be seen from the figure that the output power curve has two peak values. Figure 7 shows an output power curve of a photovoltaic string which is formed by two photovoltaic modules connected in parallel in a case that one of the photovoltaic modules is shaded. It can be seen from the figure that the output power curve has a local sudden change.

Therefore, an output power curve of a photovoltaic string formed by any number of photovoltaic modules connected in series-parallel with each other has multiple peak values. However, a complicated algorithm is required to calculate the multiple peak values, which results in a high requirement on hardware of a whole photovoltaic inverter system and thus a high cost.

However, it is found that, even if maximum power point tracking may be performed on a photovoltaic string with a complicated algorithm, a series-parallel connection of the photovoltaic modules results in a series power loss and a parallel power loss of the photovoltaic inverter system in a large-scale photovoltaic string simulation.

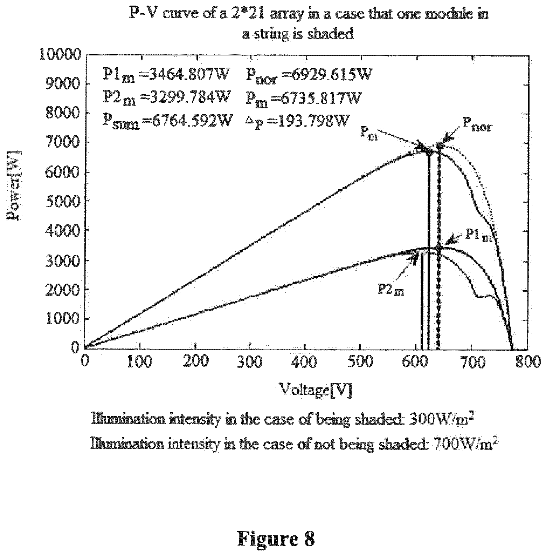

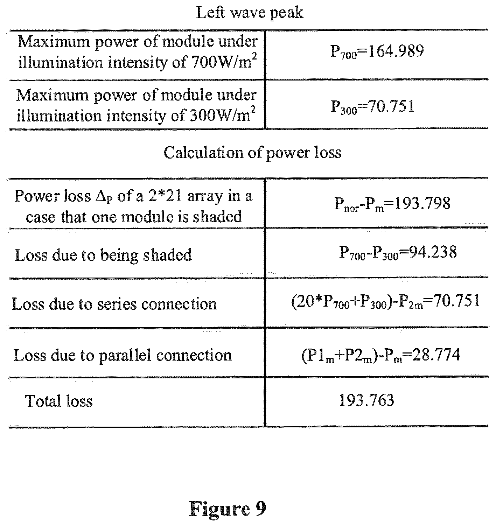

For example, in a simulation of a photovoltaic array that is formed by two photovoltaic strings connected in parallel with each other, in which each photovoltaic string includes 21 photovoltaic modules, even if only one of 42 photovoltaic modules is shaded, a power loss of approximately 193.8W occurs in total power. However, it can be seen from Figure 8 and Figure 9 that, only a loss of approximately 94.2W is caused by being shaded, and the other loss of 100W is caused by the series-parallel connection of the photovoltaic modules.

That is, in a case that the photovoltaic modules are connected in series with each other and currents of the photovoltaic modules are forced to be equal, the series loss of the photovoltaic array results from that many modules in the string each deviates from their maximum power point. Furthermore, in a case that the photovoltaic strings are connected in parallel with each other and voltages of the photovoltaic strings are forced to be equal, the parallel loss of the photovoltaic array results from that each string deviates from a maximum power point of the string.

However, in an actual photovoltaic inverter system, factors such as being shaded or aging of a photovoltaic module and weather conditions are inevitable. Therefore, in the embodiment, a DC/DC converter 102 is arranged at an output end of a photovoltaic module 101, and the DC/DC converter 102 is configured to sample an input signal or an output signal of the DC/DC converter 102 and perform a loop process on the input signal or the output signal to maintain the input signal or the output signal at a preset value, so as to keep the output power of the photovoltaic module to be the maximum output power, absolutely avoiding the series loss and the parallel loss due to the series-parallel connection of the photovoltaic modules, thereby solving the problem of multiple peak values of a photovoltaic array due to being shaded or aging of the photovoltaic modules.

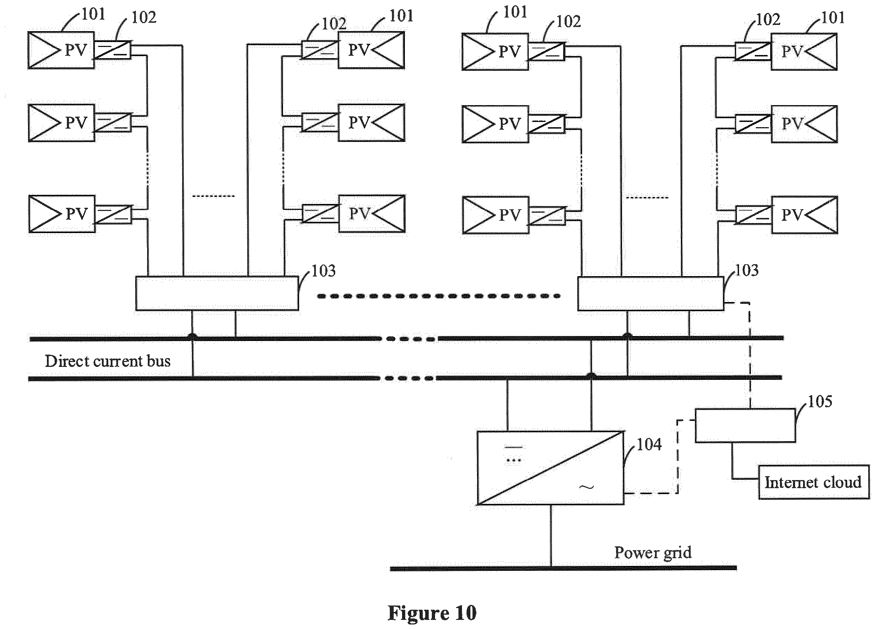

In addition, as shown in Figure 10, based on the above embodiment, the photovoltaic inverter system according to the embodiment further includes a communication device 105.

One end of the communication device 105 is connected to the Internet cloud, and the other end of the communication device 105 is connected to the centralized inverter 104 and/or the direct current combiner device 103. The communication device 105 is configured to collect production capacity information on the photovoltaic modules 101 and schedule electric energy based on the production capacity information.

Specifically, the DC/DC converters communicate with the centralized inverter according to a PLC protocol, a RS485 communication protocol or a Zigbee protocol.

Based on the above embodiment, it is considered that a non-isolated low gain converter has high conversion efficiency for converting an input voltage to an output voltage, and has a simple circuit structure. Therefore, in an embodiment, the non-isolated low gain converter is preferably used as a DC/DC converter 102. The non-isolated low gain converter includes a non-isolated full-bridge BUCK/BOOST converter or a non-isolated half-bridge BUCK converter.

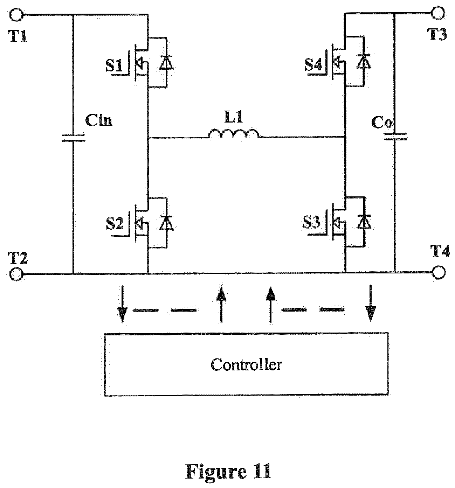

Reference is made to Figure 11, which shows a circuit diagram of the non-isolated full-bridge BUCK/BOOST converter.

In the non-isolated full-bridge BUCK/BOOST converter, T1 and T2 form input terminals, T3 and T4 form output terminals, S1 and S2 form a BUCK half-bridge leg, S3 and S4 form a BOOST half-bridge leg, and an inductor L1 is connected between middle points of the two bridge legs. The non-isolated full-bridge BUCK/BOOST converter further includes a controller. T1 is connected to a positive input terminal of a photovoltaic module, and T2 is connected to a negative input terminal of the photovoltaic module. A power input from the photovoltaic module is received between T1 and T2, and input power from the photovoltaic module is converted into output power at a certain voltage between T3 and T4. The controller in the BUCK/BOOST converter may detect information such as an output voltage, an output current and an environmental temperature of the module, and may perform the loop control and the maximum power point tracking based on the detected information. An input voltage or an input current may be maintained at a certain level, so that the DC/DC converter continuously tracks a maximum power point of the photovoltaic module. Alternatively, an output voltage or an output current may be maintained at a certain level, so that the DC/DC converter continuously tracks the maximum power point of the photovoltaic module.

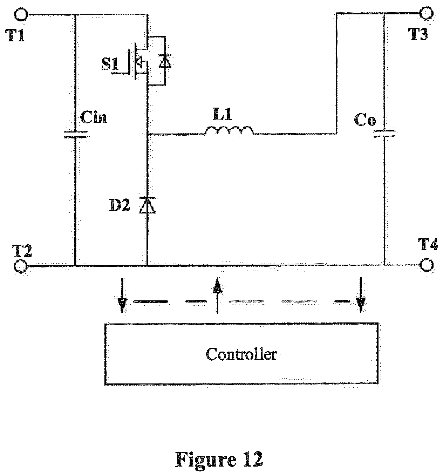

Reference is made to Figure 12, which shows a circuit diagram of the non-isolated half-bridge BUCK converter.

In the non-isolated half-bridge BUCK converter, T1 and T2 form input terminals, T3 and T4 form output terminals, S1 and D2 form a BUCK half-bridge leg, and an inductor L1 is connected between a middle point of the bridge leg and a positive output terminal T3. The non-isolated half-bridge BUCK converter further includes a controller. T1 is connected to a positive input terminal of a photovoltaic module, and T2 is connected to a negative input terminal of the photovoltaic module. A power input from the photovoltaic module is received between T1 and T2, and the input power from the photovoltaic module is converted into output power at a certain voltage between T3 and T4. The controller in the BUCK converter may detect information such as an output voltage, an output current and an environmental temperature of the module, and may perform the loop control and the maximum power point tracking based on the detected information. An input voltage or an input current may be maintained at a certain level, so that the DC/DC converter continuously tracks a maximum power point of the photovoltaic module. Alternatively, an output voltage or an output current may be maintained at a certain level, so that the DC/DC converter continuously tracks the maximum power point of the photovoltaic module.

Furthermore, the photovoltaic inverter system according to the embodiment may further include a protection element. The protection element is connected in series between the strings, such as the DC/DC converter strings and the photovoltaic strings, to prevent backflow of the electric energy between the strings. The protection element includes a diode, a MOS transistor, a controlled mechanical switch or a fuse. Preferably, the direct current combiner device includes a combiner box or a busbar. In addition, an inverter with a capacity greater than 100kw may be selected as the centralized inverter according to the embodiment, to meet requirements of high power electricity generation.

Based on the photovoltaic inverter system according to the above embodiment, an operation method of the photovoltaic inverter system is further provided, which includes the following operations.

An Input signal or an output signal of each DC/DC converter is sampled by the DC/DC converter, and a loop process is performed by the DC/DC converter on the input signal or the output signal to maintain the input signal or the output signal at a preset value.

For the operation principles of the operation method, one may referred to operation principles of the photovoltaic inverter system, which is not repeated herein.

In summary, in the photovoltaic inverter system according to the embodiment, an input signal or an output signal of each DC/DC converter is sampled by the DC/DC converter, and a loop process is performed by the DC/DC converter on the input signal or the output signal to maintain the input signal or the output signal at a preset value, so as to keep the output power of the photovoltaic module to be maximum output power, thereby solving the problem of the series-parallel mismatch of a photovoltaic array due to being shaded or aging of a photovoltaic module. In addition, since the photovoltaic inverter system can include only one centralized inverter, the cost is reduced compared with photovoltaic inverter systems in the conventional technology.

Embodiments of the present disclosure are described in a progressive manner, each of the embodiments emphasizes differences between the embodiment and other embodiments, and the same or similar parts among the embodiments can be referred to each other.

Based on the above description of the disclosed embodiments, the person skilled in the art is capable of carrying out or using the present disclosure. It is obvious for the person skilled in the art to make many modifications to these embodiments. However, the scope of the invention is solely defined by the appended claims.

## Claims

1. A photovoltaic inverter system, comprising:
photovoltaic modules (101);
direct current/direct current, DC/DC, converters (102), wherein an input end of each of the DC/DC converters (102) is connected to at least one of the photovoltaic modules (101), and each of the DC/DC converters (102) is configured to control output power of the connected photovoltaic module (101);
at least one direct current combiner device (103), wherein output ends of a plurality of DC/DC converters among the DC/DC converters (101) are connected in series with each other to form a DC/DC converter string connected to an input end of the direct current combiner device (103), and the direct current combiner device (103) is configured to combine direct currents outputted from a plurality of the DC/DC converter strings; and
a centralized inverter (104), wherein an output end of the at least one direct current combiner device (103) is connected to an input end of the centralized inverter (104), and the centralized inverter (104) is configured to convert a direct current outputted from the at least one direct current combiner device (103) into an alternating current and couple the alternating current to a power grid or a load;
**characterised in that**
the photovoltaic inverter system further comprises a photovoltaic string connected to the input end of the direct current combiner device, the photovoltaic string comprises one or more of the photovoltaic modules (101) and one or more of the DC/DC converters (102), wherein the one or more of the photovoltaic modules (101) and outputs of the one or more of the DC/DC converters (102) are connected in series with each other.

2. The photovoltaic inverter system according to claim 1, further comprising:
a communication device (105), wherein one end of the communication device (105) is connected to the Internet cloud and the other end of the communication device (105) is connected to at least one of the centralized inverter (104) and the direct current combiner device (103), and the communication device (105) is configured to collect production capacity information on the photovoltaic modules (101) and schedule electric energy based on the production capacity information.

3. The photovoltaic inverter system according to claim 1, wherein the input end of each of the DC/DC converters (102) is connected to two to six of the photovoltaic modules (101).

4. The photovoltaic inverter system according to claim 1, wherein each of the DC/DC converters (102) is a non-isolated low gain converter comprising a non-isolated full-bridge BUCK/BOOST converter or a non-isolated half-bridge BUCK converter.

5. The photovoltaic inverter system according to claim 1, wherein the direct current combiner device (103) comprises a combiner box or a busbar.

6. The photovoltaic inverter system according to claim 1, wherein the DC/DC converters (102) are configured to communicate with the centralized inverter (104) according to a power line communication, PLC, protocol, a RS485 communication protocol or a Zigbee protocol.

7. The photovoltaic inverter system according to claim 1, wherein the DC/DC converters (102) are configured to communicate with the centralized inverter (104) via the direct current combiner device (103).

8. The photovoltaic inverter system according to claim 1, wherein the centralized inverter (104) has a capacity greater than 100 kW.

9. The photovoltaic inverter system according to claim 1, further comprising:
another protection element connected in series between a pair of the photovoltaic strings, or between a pair of the DC/DC converter string and the photovoltaic string, wherein the another protection element comprises one or more of a diode, a metal oxide semiconductor, MOS, transistor, a controlled mechanical switch and a fuse.

10. An operation method, applied to the photovoltaic inverter system according to any one of claims 1 to 9, comprising:
sampling, by each of the DC/DC converters (102), an input signal or an output signal of the DC/DC converter, and
performing, by the DC/DC converter, a loop process on the input signal or the output signal, to maintain the input signal or the output signal at a preset value.

11. The operation method according to claim 10, further comprising:
performing, by the centralized inverter (104), maximum power point tracking by sampling direct current side information or alternating current side information, to obtain maximum output power of the photovoltaic inverter system.

## Patentansprüche

1. Photovoltaik-Wechselrichtersystem, umfassend:
Photovoltaikmodule (101);
Gleichspannungswandler, DC/DC-Wandler, (102), wobei ein Eingangsende eines jeden der DC/DC-Wandler (102) mit mindestens einem der Photovoltaikmodule (101) verbunden ist und jeder der DC/DC-Wandler (102) dazu konfiguriert ist, die Ausgangsleistung des verbundenen Photovoltaikmoduls (101) zu steuern;
mindestens eine Gleichstrom-Combiner-Vorrichtung (103), wobei Ausgangsenden einer Vielzahl von DC/DC-Wandlern unter den DC/DC-Wandlern (101) in Reihe miteinander verbunden sind, um einen DC/DC-Wandlerstrang zu bilden, der mit einem Eingangsende der Gleichstrom-Combiner-Vorrichtung (103) verbunden ist, und die Gleichstrom-Combiner-Vorrichtung (103) dazu konfiguriert ist, Gleichströme zu kombinieren, die von einer Vielzahl der DC/DC-Wandlerstränge ausgegeben werden; und
einen zentralen Wechselrichter (104), wobei ein Ausgangsende der mindestens einen Gleichstrom-Combiner-Vorrichtung (103) mit einem Eingangsende des zentralen Wechselrichters (104) verbunden ist und der zentrale Wechselrichter (104) dazu konfiguriert ist, einen Gleichstrom, der von der mindestens einen Gleichstrom-Combiner-Vorrichtung (103) ausgegeben wird, in einen Wechselstrom umzuwandeln und den Wechselstrom an ein Stromnetz oder eine Last anzukoppeln;
**dadurch gekennzeichnet, dass** das Photovoltaik-Wechselrichtersystem ferner einen Photovoltaikstrang umfasst, der mit dem Eingangsende der Gleichstrom-Combiner-Vorrichtung verbunden ist, der Photovoltaikstrang eines oder mehrere der Photovoltaikmodule (101) und einen oder mehrere der DC/DC-Wandler (102) umfasst, wobei das eine oder die mehreren der Photovoltaikmodule (101) und Ausgänge des einen oder der mehreren der DC/DC-Wandler (102) in Reihe miteinander verbunden sind.

2. Photovoltaik-Wechselrichtersystem nach Anspruch 1, ferner umfassend:
eine Kommunikationsvorrichtung (105), wobei ein Ende der Kommunikationsvorrichtung (105) mit der Internet-Cloud verbunden ist und das andere Ende der Kommunikationsvorrichtung (105) mit mindestens einem aus dem zentralen Wechselrichter (104) und der Gleichstrom-Combiner-Vorrichtung (103) verbunden ist und die Kommunikationsvorrichtung (105) dazu konfiguriert ist, Produktionskapazitätsinformationen zu den Photovoltaikmodulen (101) zu sammeln und elektrische Energie basierend auf den Produktionskapazitätsinformationen zu planen.

3. Photovoltaik-Wechselrichtersystem nach Anspruch 1, wobei das Eingangsende eines jeden der DC/DC-Wandler (102) mit zwei bis sechs der Photovoltaikmodule (101) verbunden ist.

4. Photovoltaik-Wechselrichtersystem nach Anspruch 1, wobei jeder der DC/DC-Wandler (102) ein nicht isolierter Wandler mit geringer Verstärkung ist, der einen nicht isolierten Vollbrücken-Ab-/Aufwärtswandler oder einen nicht isolierten Halbbrücken-Abwärtswandler umfasst.

5. Photovoltaik-Wechselrichtersystem nach Anspruch 1, wobei die Gleichstrom-Combiner-Vorrichtung (103) eine Combiner-Box oder eine Stromschiene umfasst.

6. Photovoltaik-Wechselrichtersystem nach Anspruch 1, wobei die DC/DC-Wandler (102) dazu konfiguriert sind, mit dem zentralen Wechselrichter (104) gemäß einem Powerline-Communication-Protokoll, PLC-Protokoll, einem RS485-Kommunikationsprotokoll oder einem Zigbee-Protokoll zu kommunizieren.

7. Photovoltaik-Wechselrichtersystem nach Anspruch 1, wobei die DC/DC-Wandler (102) dazu konfiguriert sind, mit dem zentralen Wechselrichter (104) über die Gleichstrom-Combiner-Vorrichtung (103) zu kommunizieren.

8. Photovoltaik-Wechselrichtersystem nach Anspruch 1, wobei der zentrale Wechselrichter (104) eine Leistung von mehr als 100 kW aufweist.

9. Photovoltaik-Wechselrichtersystem nach Anspruch 1, ferner umfassend:
ein weiteres Schutzelement, das in Reihe zwischen einem Paar der Photovoltaikstränge oder zwischen einem Paar des DC/DC-Wandlerstrangs und dem Photovoltaikstrang verbunden ist, wobei das weitere Schutzelement eines oder mehrere aus einer Diode, einem Metalloxid-Halbleiter-Transistor, MOS-Transistor, einem gesteuerten mechanischen Schalter und einer Sicherung umfasst.

10. Betriebsverfahren, das auf das Photovoltaik-Wechselrichtersystem nach einem der Ansprüche 1 bis 9 angewendet wird, umfassend:
Abtasten, durch jeden der DC/DC-Wandler (102), eines Eingangssignals oder eines Ausgangssignals des DC/DC-Wandlers, und
Durchführen, durch den DC/DC-Wandler, eines Schleifenprozesses auf dem Eingangssignal oder dem Ausgangssignal, um das Eingangssignal oder das Ausgangssignal auf einem voreingestellten Wert zu halten.

11. Betriebsverfahren nach Anspruch 10, ferner umfassend:
Durchführen, durch den zentralen Wechselrichter (104), eines Maximum Power Point Trackings durch Abtasten von Informationen auf der Gleichstromseite oder von Informationen auf der Wechselstromseite, um eine maximale Ausgangsleistung des Photovoltaik-Wechselrichtersystems zu erlangen.

## Revendications

1. Système d'onduleur photovoltaïque, comprenant :
des modules photovoltaïques (101) ;
des convertisseurs courant continu/courant continu, CC/CC (102), dans lequel une extrémité d'entrée de chacun des convertisseurs CC/CC (102) est reliée à au moins un des modules photovoltaïques (101), et chacun des convertisseurs CC/CC (102) est configuré pour contrôler la puissance de sortie du module photovoltaïque relié (101) ;
au moins un dispositif de combinaison de courant continu (103), dans lequel les extrémités de sortie d'une pluralité de convertisseurs CC/CC parmi les convertisseurs CC/CC (101) sont reliées en série les unes aux autres pour former une chaîne de convertisseurs CC/CC reliée à une extrémité d'entrée du dispositif de combinaison de courant continu (103), et le dispositif de combinaison de courant continu (103) est configuré pour combiner les courants continus délivrés par une pluralité de chaînes de convertisseurs CC/CC ; et
un onduleur centralisé (104), dans lequel une extrémité de sortie de l'au moins un dispositif de combinaison de courant continu (103) est reliée à une extrémité d'entrée de l'onduleur centralisé (104), et l'onduleur centralisé (104) est configuré pour convertir un courant continu délivré par l'au moins un dispositif de combinaison de courant continu (103) en un courant alternatif et coupler le courant alternatif à un réseau électrique ou à une charge ;
**caractérisé en ce que** le système d'onduleur photovoltaïque comprend en outre une chaîne photovoltaïque reliée à l'extrémité d'entrée du dispositif de combinaison de courant continu, la chaîne photovoltaïque comprend un ou plusieurs des modules photovoltaïques (101) et un ou plusieurs des convertisseurs CC/CC (102), dans lequel l'au moins un module photovoltaïque (101) et les sorties des un ou plusieurs convertisseurs CC/CC (102) sont reliés en série les uns aux autres.

2. Système d'onduleur photovoltaïque selon la revendication 1, comprenant en outre :
un dispositif de communication (105), dans lequel une extrémité du dispositif de communication (105) est reliée au cloud Internet et l'autre extrémité du dispositif de communication (105) est reliée à au moins l'un de l'onduleur centralisé (104) et du dispositif de combinaison de courant continu (103), et le dispositif de communication (105) est configuré pour collecter des informations de capacité de production sur les modules photovoltaïques (101) et planifier l'énergie électrique sur la base des informations de capacité de production.

3. Système d'onduleur photovoltaïque selon la revendication 1, dans lequel l'extrémité d'entrée de chacun des convertisseurs CC/CC (102) est reliée à deux à six des modules photovoltaïques (101).

4. Système d'onduleur photovoltaïque selon la revendication 1, dans lequel chacun des convertisseurs CC/CC (102) est un convertisseur à faible gain non isolé comprenant un convertisseur BUCK/BOOST à pont complet non isolé ou un convertisseur BUCK à demi-pont non isolé.

5. Système d'onduleur photovoltaïque selon la revendication 1, dans lequel le dispositif de combinaison de courant continu (103) comprend un boîtier de combinaison ou une barre omnibus.

6. Système d'onduleur photovoltaïque selon la revendication 1, dans lequel les convertisseurs CC/CC (102) sont configurés pour communiquer avec l'onduleur centralisé (104) selon un protocole de communication par ligne électrique, PLC, un protocole de communication RS485 ou un protocole Zigbee.

7. Système d'onduleur photovoltaïque selon la revendication 1, dans lequel les convertisseurs CC/CC (102) sont configurés pour communiquer avec l'onduleur centralisé (104) via le dispositif de combinaison de courant continu (103).

8. Système d'onduleur photovoltaïque selon la revendication 1, dans lequel l'onduleur centralisé (104) a une capacité supérieure à 100 kW.

9. Système d'onduleur photovoltaïque selon la revendication 1, comprenant en outre :
un autre élément de protection relié en série entre une paire de chaînes photovoltaïques, ou entre une paire de la chaîne de convertisseurs CC/CC et de la chaîne photovoltaïque, dans lequel l'autre élément de protection comprend un ou plusieurs éléments parmi une diode, un semi-conducteur à oxyde métallique, un MOS, un transistor, un commutateur mécanique commandé et un fusible.

10. Procédé de fonctionnement, appliqué au système d'onduleur photovoltaïque selon l'une quelconque des revendications 1 à 9, comprenant :
l'échantillonnage, par chacun des convertisseurs DC/DC (102), d'un signal d'entrée ou d'un signal de sortie du convertisseur CC/CC, et
l'exécution, par le convertisseur CC/CC, d'un traitement en boucle sur le signal d'entrée ou le signal de sortie, pour maintenir le signal d'entrée ou le signal de sortie à une valeur prédéfinie.

11. Procédé de fonctionnement selon la revendication 10, comprenant en outre :
l'exécution, par l'onduleur centralisé (104), d'un suivi du point de puissance maximale par échantillonnage d'informations côté courant continu ou d'informations côté courant alternatif, pour obtenir une puissance de sortie maximale du système d'onduleur photovoltaïque.
